# EUROPEAN PATENT SPECIFICATION

(11) **EP 0 441 556 B1**
(45) Date of publication and mention of the grant of the patent: **23.10.1996**
(21) Application number: 91300859.5
(22) Date of filing: 04.02.1991
(51) Int. Cl.: G11B 19/02, G11B 15/02

(54) **Reproducing apparatus for video signal**
Wiedergabegerät für Videosignale
Appareil de reproduction pour un signal vidéo

(30) Priority: 06.02.1990 JP 25151/90
(43) Date of publication of application: 14.08.1991
(73) Proprietor: SONY CORPORATION, Tokyo 141 (JP)
(72) Inventor: Souichi, Tanaka, Shinagawa-ku, Tokyo 141 (JP)
(74) Representative: Cotter, Ivan John

(56) References cited:
- EP-A- 0 198 658
- EP-A- 0 231 659
- EP-A- 0 290 803
- FR-A- 2 491 707
- GB-A- 2 186 668
- US-A- 4 853 803
- PATENT ABSTRACTS OF JAPAN vol. 11, no. 389 (P-648)19 December 1987

## Description

The invention relates generally to a video signal reproducing apparatus having variable speed reproduction modes.

In the advanced modern video technologies, video signal reproducing apparatus performs a lot of functions. Normally, a video signal reproducing apparatus has a plurality of operation keys, such as a rewind key, a reproduction or play key, a fast forward key, a stop key, a pause key, a low speed reproduction key and so forth. Each key is manually operated to perform the required function. Picture search mode function is also facilitated for high speed feeding field of reproduction. In general, picture search mode of operation is performed by operating the fast forward key or the rewind key during play mode or pause mode operation.

Some kinds of video signal reproducing apparatus have a rotary dial for commanding picture search during play mode or pause mode operation. The rotary dial type picture search function has been advantageously introduced for convenience of adjustment of picture search speed. Namely, in such a kind of video signal reproducing apparatus, picture search speed and direction, ie speed of feeding fields, is variable depending upon angular position of the rotary dial. namely, greater angular offset from a neutral position represents higher picture search speed.

Even though the increased functions in the video signal reproducing apparatus have been well accepted in the market, difficulties can be encountered for some users who are not familiar with the operation of the video signal reproducing apparatus. In particular, when the video signal reproducing apparatus has two ways of commanding picture search, eg by operating the fast forward key or the rewind key and by operating a rotary dial, an unfamiliar user can be put off from operating the apparatus as desired. Therefore, for a certain kind of user, the increased function which necessarily causing increasing of function key, may increase difficulty of operation.

Patent Specification EP-A-231 659 discloses a remote control commander wherein a rotary dial is used to command various speed modes, the dial can also be used for controlling other functions by operation of a mode selection switch.

According to the invention, there is provided video signal reproducing apparatus, including a control device for controlling feeding of a recording medium on which the video signal is recorded and reproduction thereof by the apparatus;
wherein the control device comprises a mode selector which is manually operable to select an operational mode of the video signal reproducing apparatus at least between a first mode in which video signal reproducing is enabled and a second mode in which video signal reproduction is disabled; and
rotary dial means for entry of sequentially varying command value to control direction and speed of feeding of the recording medium;
characterised in that the rotary dial means also cooperates with the mode selector to command the feed speed of the recording medium in variable speed reproduction while said first mode is selected and to command fast forward or rewinding operation while said second mode is selected.

Thus the recording medium may be fed at a predetermined standard speed when the first mode is selected and the rotary dial is maintained at a neutral position and the recording medium feeding speed sequentially varied according to variation of magnitude of angular offset of the rotary dial means from the neutral position. In addition, the recording medium may be fed at a maximum feed speed in the second mode recording medium feeding operation in the forward or reverse direction when the magnitude of an angular offset of the rotary dial means from the neutral position becomes greater than or equal to a predetermined value.

The invention is diagrammatically illustrated by way of example in the accompanying drawings, in which:
Figure 1 is a perspective view of the preferred embodiment of video signal reproducing apparatus according to the invention; and
Figures 2(a) to 2(e) are enlarged front elevation of a rotary dial of the apparatus of Figure 1 as operated in various operational modes.

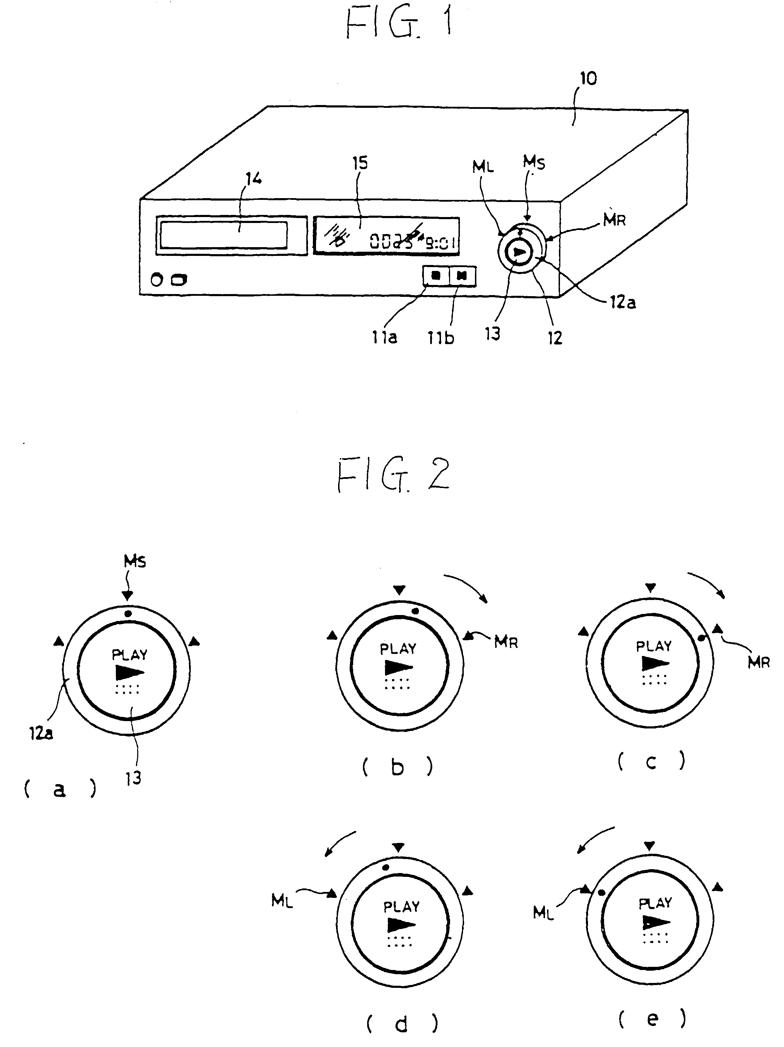

Referring now to the drawings, particularly to Figure 1, video signal reproducing apparatus has a housing 10. A stop key 11a and a pause key 11b are provided on a front panel of the housing 10. A rotary dial assembly 12 is also provided on the front panel of the housing 10. The rotary dial assembly 12 includes a rotary ring 12a which can be rotated in a range between M_{L} and M_{R} across a neutral position M_{S}. A reproduction or play key 13 is provided at the centre of the rotary ring 12a. The rotary ring 13 is associated with a self-return mechanism for automatically returning to the initial position M_{S} when operational force applied to the rotary ring is released. The play key 13 comprises a push button to be depressed for commanding play mode operation.

The housing 10 is also provided a video cassette receptacle slot 14 and a display 15.

In the shown embodiment, feed direction and feed speed of a video tape can be controlled solely by the rotary ring 12a. Namely, by rotating the rotary ring 12a toward the position M_{L} or M_{R} from the neutral position M_{S}. Magnitude of angular displacement from the neutral position M_{S} represents the commanded speed of feed. Therefore, when the magnitude of angular displacement from the neutral position M_{S} is small as shown in Figure 2(b) and 2(d), low speed feed can be performed. On the other hand, when the rotary ring 12a is fully rotated to the position M_{L} or M_{R} as shown in Figure 2(c) and 2(e), maximum speed feed can be performed.

On the other hand, depending upon the position of the play key, the apparatus operates two mutually distinct operational modes. Namely, when the play key 13 is depressed for commanding a first mode of operation, the video signal is reproduced. On the other hand, when the play key 13 is in the released position for commanding a second mode, the video signal is not reproduced. In either position of the play key 13, the feed speed control through the rotary ring 12a can be performed.

When the play key 13 is depressed for operation in the first mode and the rotary ring 13 is maintained at the neutral position, the video signal is reproduced at normal or standard speed. At this condition, if the rotary ring 13 is operated to cause angular offset from the neutral position, normal speed mode video signal reproduction is terminated and variable speed mode video signal reproduction is initiated. In the variable speed mode video signal reproduction, the feed speed of the field is variable depending upon the magnitude of the angular offset from the neutral position. Therefore, as set forth above, when the angular offset is small as shown in Figures 2(b) and 2(d), slow speed reproduction can be performed. On the other hand, when the angular offset from the neutral positions relatively large, high speed picture search can be performed. If the operational force exerted on the rotary ring 12a is released, the rotary ring returns into the neutral position M_{S}. Upon return of the rotary ring to the neutral position, normal speed reproduction is resumed. Similarly, slow speed reproduction and high speed picture search can also be performed during pause mode operation, in which the reproduced picture is frozen. In such case, the rotary ring 12a is rotated substantially in the same manner as that discussed above. In this case, releasing of the operational force exerted on the rotary ring 12a causes resumption of the pause mode operation.

On the other hand, when the play key 13 is in the released position and the rotary ring 12a is maintained at the neutral position, the apparatus is maintained in an inoperative or stand-by state. At this position, if the rotary ring 12a is manually operated to the predetermined positions M_{L} and M_{R}, the apparatus starts to feed a recording medium, such as a video tape, in forward or reverse directions at the maximum speed without reproducing the video signal. Therefore, fast feed and rewinding mode operation can take place.

As can be appreciated herefrom the illustrated embodiment of video signal reproducing apparatus can successfully reduce the function elements to be manually operated by enabling multiple function with the rotary dial assembly. This makes it easy to operate the apparatus even for users who are not familiar with operation of the video signal reproducing apparatus. Furthermore, since the play key which is frequently operated, is provided with the rotary ring to form the rotary dial assembly and placed separately from other function keys, operation of the play key becomes easier. In addition, the play key in the rotary dial assembly can be greater than other function keys for further convenient operation.

Foregoing operations may be governed by a control circuit which can detect operational mode of the apparatus depending upon the position of the play key and detecting operational magnitude of the rotary ring for performing commanded operation.

The invention is applicable not only for the shown video signal reproducing apparatus adapted for reproduction of a magnetic video signal recording medium, but also for a laser disc and so forth. Furthermore, the function element arrangement according to the invention is also applicable for a remote commander.

## Claims

1. Video signal reproducing apparatus, including a control device for controlling feeding of a recording medium on which the video signal is recorded and reproduction thereof by the apparatus;
wherein the control device comprises a mode selector (13) which is manually operable to select an operational mode of the video signal reproducing apparatus at least between a first mode in which video signal reproducing is enabled and a second mode in which video signal reproduction is disabled; and
rotary dial means (12) for entry of sequentially varying command value to control direction and speed of feeding of the recording medium;
characterised in that the rotary dial means (12) also cooperates with the mode selector (13) to command the feed speed of the recording medium in variable speed reproduction while said first mode is selected and to command fast forward or rewinding operation while said second mode is selected.

## Patentansprüche

1. Videosignal-Wiedergabegerät mit einer Steuervorrichtung zur Steuerung der Fortbewegung eines Aufzeichnungsmediums, auf dem das Videosignal aufgezeichnet ist, und zur Steuerung der Wiedergabe des Videosignals durch das Gerät,
wobei die Steuervorrichtung aufweist:
einen manuell betätigbaren Betriebsartwähler (13) zur Auswahl einer Betriebsart des Videosignal-Wiedergabegeräts unter zumindest einer ersten Betriebsart, in der die Wiedergabe des Videosignals ermöglicht ist, und einer zweiten Betriebsart, in der die Wiedergabe des Videosignals unwirksam ist,
und eine Wählscheibenanordnung (12) zur Eingabe eines sich sequentiell ändernden Steuerwerts zur Steuerung der Richtung und der Geschwindigkeit der Fortbewegung des Aufzeichnungsmediums,
**dadurch gekennzeichnet**,
daß die Wählscheibenanordnung (12) außerdem mit dem Betriebsartwähler (13) zusammenwirkt, um bei der Wiedergabe mit variabler Geschwindigkeit die Geschwindigkeit der Fortbewegung des Aufzeichnungsmediums zu steuern, wenn die genannte erste Betriebsart gewählt ist, und den schnellen Vorlauf oder Rücklauf zu steuern, wenn die zweite Betriebsart gewählt ist.

## Revendications

1. Appareil de reproduction de signaux vidéo, comportant un dispositif de commande pour commander le défilement d'un support d'enregistrement sur lequel le signal vidéo est enregistré et la reproduction de celui-ci par l'appareil,
- dans lequel le dispositif de commande comprend un sélecteur de mode (13) qui est actionnable manuellement pour sélectionner un mode de fonctionnement de l'appareil de reproduction de signaux vidéo au moins entre un premier mode, dans lequel la reproduction d'un signal vidéo est validée, et un deuxième mode, dans lequel la reproduction d'un signal vidéo est invalidée; et
des moyens à cadran rotatif (12) pour entrer une valeur de commande à variation séquentielle pour commander le sens et la vitesse de défilement du support d'enregistrement,
caractérisé en ce que les moyens à cadran rotatif (12) coopèrent également avec le sélecteur de mode (13) pour commander la vitesse de défilement du support d'enregistrement dans la reproduction à vitesse variable pendant que ledit premier mode est sélectionné, et pour commander l'opération d'avance rapide ou de rembobinage pendant que ledit deuxième mode est sélectionné.
